# EUROPÄISCHE PATENTSCHRIFT

(11) **EP 3 995 538 B1**
(45) Veröffentlichungstag und Bekanntmachung des Hinweises auf die Patenterteilung: **07.06.2023**
(21) Anmeldenummer: 20205676.8
(22) Anmeldetag: 04.11.2020
(51) Int. Cl.: C08L 3/02, C08L 29/04, C09J 103/02, C09J 129/04, C09J 197/02

(54) **ZUCKERHALTIGES BINDEMITTELSYSTEM FÜR HOLZWERKSTOFFPLATTEN, EIN VERFAHREN ZUR HERSTELLUNG EINER HOLZWERKSTOFFPLATTE UNTER VERWENDUNG DIESES ZUCKERHALTIGEN BINDEMITTELSYSTEMS UND HOLZWERKSTOFFPLATTE HERGESTELLT NACH DIESEM VERFAHREN**
SUGAR-CONTAINING BINDER SYSTEM FOR WOOD MATERIAL BOARDS, A METHOD FOR PRODUCING A WOOD MATERIAL BOARD USING THIS SUGAR-CONTAINING BINDER SYSTEM AND WOOD MATERIAL BOARD OBTAINED BY THIS METHOD
SYSTÈME DE LIANT CONTENANT DU SUCRE POUR PANNEAUX EN MATÉRIAU DÉRIVÉ DU BOIS, PROCÉDÉ DE FABRICATION D'UN PANNEAU EN MATÉRIAU DÉRIVÉ DU BOIS À L'AIDE DUDIT SYSTÈME DE LIANT CONTENANT DU SUCRE ET PANNEAU EN MATÉRIAU DÉRIVÉ DU BOIS FABRIQUÉ SELON LEDIT PROCÉDÉ

(43) Veröffentlichungstag der Anmeldung: 11.05.2022
(73) Patentinhaber: SWISS KRONO Tec AG, 6004 Luzern (CH)
(72) Erfinder: Dr. Kalwa, Norbert, 32805 Horn-Bad Meinberg (DE); Seidack, Georg, 16835 Herzberg (Mark) (DE)
(74) Vertreter: Maikowski & Ninnemann Patentanwälte Partnerschaft mbB

(56) Entgegenhaltungen:
- WO-A1-03/035740
- CN-A- 109 609 080
- CN-A- 110 607 155

## Beschreibung

Die vorliegende Erfindung betrifft ein Verfahren zur Herstellung einer Holzwerkstoffplatte unter Verwendung eines zuckerhaltigen Bindemittelsystems.

Klebstoffe bzw. Bindemittel sind ein entscheidender Bestandteil bei der industriellen Fertigung von einer Vielzahl von Produkten, u.a. bei der Herstellung von Holzwerkstoffplatten. Hierbei werden Holzzerkleinerungsprodukte mit dem Bindemittel beleimt und unter Druck- und Temperaturanwendung zu Formkörpern wie z.B. Platten verpresst. Die Art und Menge des verwendeten Bindemittels wird dabei wesentlich von der Größe und Qualität der verwendeten Holzfasern und/oder Holzspäne beeinflusst.

Zur Herstellung von Holzwerkstoffen (HWS) wird seit Jahrzehnten eine relativ begrenzte Anzahl von Bindemitteln eingesetzt. Diese Bindemittel haben sich nachdem, die Produktion der HWS auf eine industrielle Basis gestellt worden war, als geeignet und in großer Menge verfügbar erwiesen.

Diese Bindemittel enthalten im Wesentlichen zwei Komponenten. Die eine Komponente ist Formaldehyd, die andere Komponente ist eine Chemikalie auf Erdölbasis (Phenol, Benzol, Toluol) oder Harnstoff. Beide dieser Komponenten stellen sich als zunehmend problematisch dar. Formaldehyd wird heute wegen seiner karzinogenen Eigenschaften sehr kritisch betrachtet und es gibt Bestrebungen den Einsatz zu minimieren, wenn nicht gar in manchen Anwendungen ganz zu verbieten. Dies gilt auch für HWS, die durch den Einsatz von formaldehydhaltigen Leimen, mehr oder weniger Formaldehyd in der Nutzung emittieren.

Die heute im Wesentlichen eingesetzten Leime sind wegen ihrer toxikologischen Eigenschaften somit nicht unproblematisch. Dies ist auch bei den Rohstoffen zu berücksichtigen. So müssen bei der Herstellung bereits besondere Sicherheitsmaßnahmen getroffen werden. Dies gilt auch für den Transport und die Verarbeitung. Zudem beinhaltet die Leimherstellung auch einen Kondensationsschritt, der energetisch ungünstig ist.

Auch werden die Komponenten auf Erdölbasis, wie Phenol, Benzol oder Toluol kritisch betrachtet, da über kurz oder lang der Einsatz von Rohstoffen auf Basis nachwachsender Rohstoffe favorisiert werden sollte. Zudem verschlechtert der überwiegende Einsatz von Komponenten auf Basis von Erdölprodukten die CO₂-Bilanz der Leime.

Die Nachteile bei der Verwendung von klassischen Leimen bestehen somit in Verbrauch von Erdöl, einer schlechten CO₂-Bilanz und der Emission von toxischen Stoffen.

Beim Einsatz von Rohstoffen auf Basis nachwachsender Rohstoffe zur Herstellung von Leimen für HWS, stellen sich allerdings ähnliche Probleme, wie beim Einsatz in anderen Bereichen (z. B.: Treibstoffe, Kunststoffe usw.), nämlich den Entzug dieser Rohstoffe zur Nahrungsmittelherstellung.

Damit ist die Auswahl der zur Herstellung eingesetzten Rohstoffe kritisch. Es muss zum einen ein Rohstoff gefunden werden, der die benötigten Eigenschaften besitzt, und zum anderen sollte dieser Rohstoff durch Verwendung als Klebstoffkomponente nicht zu einer Verknappung und/oder einer Preiserhöhung in der Lebensmittelherstellung führen.

Ansätze zur Entwicklung von Leimen auf Basis von nachwachsenden Rohstoffen sind bereits bekannt. In der US 6,822,042 B2 wird z. B. ein Leim beschrieben, der aus den Komponenten Zucker (insbesondere auf der Basis von Maissirup), Isocyanat und Polyol (bevorzugt Propylenglycol) besteht. Wie die Auflistung der Komponenten zeigt sind zwar aber immer noch zwei von drei Chemikalien auf Erdölbasis, jedoch ist die Hauptkomponente auf Basis eines nachwachsenden Rohstoffs.

WO 03/035740 A1 offenbart ein Bindemittelsystem für Holzwerkstoffplatten wie Holzfaserplatten, Holzspanplatten, OSB-Platten usw., umfassend: 80 Gew% "Corn Syrup", der Oligosaccharide, Maltose und Glucose enthält; 5 Gew% Polyvinylalcohol; 5 Gew% Isocyanat (Mondur 541, d.h. PMDI); und 10 Gew% Propylen Glykol.

Der vorliegenden Erfindung liegt die Aufgabe zugrunde, einen Leim für Holzwerkstoffplatten zu entwickeln, der im Wesentlichen aus nachwachsenden Rohstoffen besteht, die in ausreichenden Mengen zur Verfügung stehen. Weiterhin soll bei dem Einsatz dieser Rohstoffe keine Verknappung in anderen Bereichen entstehen. Die Rohstoffe sollen bezüglich ihrer Zusammensetzung keinerlei gesundheitliche Risiken bei deren Verwendung und Entsorgung besitzen. Zudem sollen sich die Produktpreise durch den Einsatz dieser Rohstoffe nicht signifikant erhöhen. Wenn möglich, sollte sich auch der neue Leim bzw. die Platte, die mit dem Leim hergestellt wird, bezüglich seinen Emissionen günstiger verhalten als die meisten Leime auf Erdölbasis. Dies soll insbesondere für die Formaldehydemission gelten. Auch sollte aus dem Einsatz der neuen Leime keine Verschlechterung des Recyclings resultieren.

Diese Aufgabe wird erfindungsgemäß durch ein Verfahren mit den Merkmalen des Anspruchs 1 gelöst.

Demnach wird ein Bindemittelsystem verwendet, welches aus drei Komponenten besteht: eine erste Komponente umfassend mindestens einen Zucker, mindestens einen Zuckeralkohol, mindestens eine Stärke oder eine Mischung davon; eine zweite Komponente umfassend mindestens einen Polyvinylalkohol; eine dritte Komponente umfassend mindestens ein Isocyanat.

Das vorliegende Bindemittelsystem wird in einem Verfahren zur Herstellung einer Holzwerkstoffplatte bereitgestellt, welches die folgenden Schritte umfasst:
a) Bereitstellen von Holzpartikel,
b) Beleimen der Holzpartikel durch
   b1) Aufbringen einer ersten Komponente umfassend mindestens einen Zucker, mindestens einen Zuckeralkohol, mindestens eine Stärke oder eine Mischung davon auf die Holzpartikel;
   b2) Aufbringen einer zweiten Komponente umfassend mindestens einen Polyvinylalkohol auf die Holzpartikel;
   b3) Aufbringen einer dritten Komponente umfassend mindestens ein Isocyanat auf die Holzpartikel;
c) Aufbringen der beleimten Holzpartikel auf ein Transportband; und
d) Verpressen der auf dem Transportband angeordneten beleimten Holzpartikel.

Für das Bindemittelsystem werden vorliegend Rohstoffe verwendet, die im Wesentlichen auf Zucker, Zuckeralkohole und/oder Stärke basieren. Der Anteil dieser Komponente sollte mindestens bei 75 Gew% liegen. Ein erheblicher Vorteil ist, dass der Leim durch das schrittweise Aufbringen bzw. Auftragen der Komponenten auf die Holzpartikel bereitgestellt wird. Dies bringt erhebliche Vorteile bezüglich der Haltbarkeit der Leime. Ebenfalls von Vorteil ist, dass man Leimmodifizierungen einfach durch prozentuale Veränderung der Komponenten vornehmen kann.

Erfindungsgemäß wird die oben beschriebene Reihenfolge des Aufbringens bzw. Auftragens der Leimkomponenten auf die Holzpartikel eingehalten.

Da es sich bei den Hauptkomponenten um wasserlösliche Verbindungen handelt und selbst von einer HWS-Platte für Möbelanwendungen eine gewisse Beständigkeit gegenüber Feuchte oder Wasser erwartet wird, wird der Rezeptur eine geringe Menge an Isocyanat (wie PMDI) zugegeben. Die Menge an Isocyanat kann für bestimmte Anwendungen auf unter ein Prozent reduziert werden.

Die Verwendung von Polyvinylalkohol hat sich als zwingend erwiesen; Leimrezepturen, die kein Polyvinylalkohol enthalten, haben keine befriedigenden Verklebungen ergeben. Es wird angenommen, dass der Polyvinylalkohol eine Umhüllung der Holzpartikel/-fasern bewirkt, wodurch ein Wegschlagen oder Diffundieren des Isocyanats in die Holzpartikel/-fasern verhindert wird. Dies wird besonders durch die filmbildenden und haftenden Eigenschaften von Polyvinylalkoholen befördert.

In einer Ausführungsform weist das vorliegende Bindemittelsystem die mindestens eine erste Komponente aus mindestens einem Zucker, mindestens einem Zuckeralkohol, mindestens einer Stärke oder einer Mischung in einer Menge zwischen 70 und 80 Gew%, bevorzugt 75 Gew% in Bezug auf die Gesamtmenge an erster, zweiter und dritter Komponente auf.

Aus den oben geschilderten Gründen zur Bedeutung und Vorteil der Verwendung von nachwachsenden Rohstoffen werden Polyole auf Basis von Zuckern oder Stärke bevorzugt. Diese lassen sich leicht durch Hydrierung bzw. durch enzymatische Umwandlung der entsprechenden Vorprodukte erzeugen.

In einer Ausführungsform des vorliegenden Bindemittelsystems werden reduzierende Mono- und/oder Disaccharide verwendet. Unter reduzierenden Mono- oder Disacchariden sind im Sinne der vorliegenden Anmeldung solche Saccharide zu verstehen, die über mindestens eine Aldehydgruppe im linearen Zustand verfügen. Nicht reduzierende Saccharide hingegen verfügen über keine freien Aldehydgruppen. Ein Beispiel für ein nicht reduzierendes Disaccharid ist Saccharose, in welchem die beiden Monosaccharide Glukose und Fruktose unter neutralen und basischen Bedingungen über eine α,β-1,2- Glykosidische Bindung in Acetalform miteinander verbunden vorliegen. Allerdings ist unter sauren Bedingungen eine Spaltung der Saccharose in die reduzierenden Monosaccharide Glukose und Fructose möglich.

In einer bevorzugten Ausführungsform werden als Monosaccharide Pentosen und Hexosen verwendet. Pentosen und Hexosen sind dabei insbesondere ausgewählt aus der Gruppe enthaltend Arabinose, Ribose, Xylose, Glukose (Dextrose), Mannose, Galaktose und Fruktose. Die genannten Saccharide können sowohl in ihrer D- als auch in ihrer L-Form verwendet werden.

In einer weiteren Ausführungsform werden als Zuckeralkohole ausgewählt aus einer Gruppe enthaltend vierwertige, fünfwertige, sechswertige Alkohole (auch bekannt als reduzierte Zucker bzw. Alditole) verwendet. Dabei können als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden. Als besonders vorteilhaft hat sich die Verwendung von Sorbit (bzw. Sorbitol) erwiesen.

Als Polyole oder polyalkoholische Verbindungen werden demnach ausschließlich mehrwertige Alkohole auf Zuckerbasis verwendet. Auf die Verwendung von synthetischen Polyolen wie Glykole, wie Ethylenglykol, Propylenglykol, Diethylenglykol, Triethylenglykol, Polyethylenglykol, Polypropylenglykol, Polybutylenglykol wird demnach verzichtet. insbesondere wird vorliegend kein 1 ,2-Propylenglykol als Leimkomponente verwendet.

In einer weitergehenden Ausführungsform wird der mindestens eine Zucker und/oder der mindestens eine Zuckeralkohol in einer Menge zwischen 80 und 200 g fl, bevorzugt in einer Menge zwischen 100 und 150 g fl, insbesondere bevorzugt in einer Menge zwischen 120 und 140 g fl bezogen auf 1 kg Holzpartikel aufgetragen. Zucker und Zuckeralkohol werden dabei bevorzugt als wässrige Lösung, als 60 Gew%ige oder 70 Gew%ige Lösung bereitgestellt und verwendet

Im Falle einer Mischung von Zucker und Zuckeralkohol kann die Menge an Zucker und Zuckeralkohol im Verhältnis zueinander variieren, wobei die Gesamtmenge in dem für Zucker und Zuckeralkohol angegebenen Bereich liegen sollte. Das Mengenverhältnis von Zucker zu Zuckeralkohol kann zwischen 3 :1 und 1 : 3, zwischen 2 :1 und 1 : 2, insbesondere bei 1 : 1 liegen.

In einer Ausführungsform ist die verwendete Stärke ausgewählt aus der Gruppe enthaltend Kartoffelstärke, Maisstärke, Weizenstärke, Reisstärke.

Stärke ist ein Polysaccharid mit der Formel (C₆H₁₀O₅)ₙ, das aus α-D-Glucose-Einheiten besteht. Das Makromolekül zählt daher zu den Kohlenhydraten. Stärke kann unter Hitzeeinwirkung ein Vielfaches ihres Eigengewichtes an Wasser physikalisch binden, aufquellen und verkleistern. Beim Erhitzen mit Wasser quillt die Stärke bei 47-57 °C, die Schichten platzen, und bei 55-87 °C (Kartoffelstärke bei 62,5 °C, Weizenstärke bei 67,5 °C) entsteht Stärkekleister, welcher je nach der Stärkesorte verschiedenes Steifungsvermögen besitzt (Maisstärkekleister größeres als Weizenstärkekleister, dieser größeres als Kartoffelstärkekleister) und sich mehr oder weniger leicht unter Säuerung zersetzt.

Stärke ist sowohl in der nativen Form als auch in modifizierter (derivatisierter) Form als Bindemittel einsetzbar. So kann die mindestens eine Stärke in nativer oder modifizierter (derivatisierter) Form verwendet werden. Bevorzugt wird als stärkehaltiges Bindemittel DuraBinders der Firma Ecosynthetix verwendet.

Im Falle der Verwendung von modifizierter bzw. derivatisierter Stärke kann diese ausgewählt sein aus einer Gruppe enthaltend kationische oder anionische Stärke, carboxylierte Stärke, carboxy-methylierte Stärke, sulfatierte Stärke, phosphorylierte Stärke, veretherte Stärke wie hydroxyalkylierte Stärke (z.B. hydroxyethylierte Stärke, hydroxypropylierte Stärke), oxidierte Stärke enthaltend Carboxyl- oder Dialdehydgruppen und hydrophobe Stärken wie Acetatester, Succinatester, Halbester oder Phosphatester.

Es ist auch generell vorstellbar eine Mischung einer natürlichen Stärke und einer derivatisierten Stärke oder von mehreren natürlichen Stärken und/oder mehreren derivatisierten Stärken zu verwenden.

Im Falle der Verwendung von Stärke wird diese bevorzugt in einer Mischung mit einem Zucker oder Zuckeralkohol eingesetzt. Die Menge an aufgetragener Stärke insbesondere in einer Mischung mit Zucker bzw. Zuckeralkohol kann bei 20 - 30 g fl, bevorzugt 25 g fl liegen.

Bevorzugt wird die Stärke als wässrige Lösung oder Aufschlämmung, z.B. als 10 Gew%ige Lösung oder Aufschlämmung auf die Holzpartikel aufgebracht.

In einer weiteren bevorzugten Ausführungsform liegt der mindestens eine Polyvinylalkohol teilweise oder vollständig hydrolysiert vor. Bevorzugt wird ein teilhydrolysierter Polyvinylalkohol eingesetzt, da dieser in dem vorliegenden Verfahren eine gute Wasserlöslichkeit aufweist.

In einer Ausführungsform wird der mindestens eine Polyvinylalkohol in einer Menge zwischen 20 und 100 g fl, bevorzugt 40 und 80 g fl, insbesondere bevorzugt zwischen 50 und 70 g fl bezogen auf 1 kg Holzpartikel aufgebracht. der Polyvinylalkohol wird bevorzugt als 15 Gew%ige oder 20 Gew%ige Lösung bereitgestellt und verwendet.

In einer Ausführungsform basiert das mindestens eine Isocyanat auf aromatischen Polyisocyanaten, insbesondere Polydiphenylmethandiisocyanat (PMDI), Toluylendiisocyanat (TDI) und/oder Diphenylmethandiisocyanat (MDI), wobei PMDI besonders bevorzugt ist.

Das mindestens eine Isocyanat wird in einer Variante in einer Menge zwischen 15 und 25 g, bevorzugt zwischen 17 und 23 g, insbesondere bevorzugt zwischen 19 und 21 g in Form einer 100Gew%igen Lösung bezogen auf 1 kg Holzpartikel aufgetragen.

Die Bindemittelkomponenten können auf die Holzpartikel aufgesprüht werden. Dies kann z.B. in einem Mischer, einem Coil oder einer Blowline erfolgen.

Nach dem schrittweisen Auftragen der Bindemittelkomponenten auf die Holzpartikel werden die beleimten Holzpartikel auf einem Transportband abgelegt oder aufgestreut und anschließend zu einer Holzwerkstoffplatte verpresst.

Das Verpressen kann bei einer Presstemperatur zwischen 150 und 250°C, bevorzugt 180°C und 220°C, und einer Presszeit zwischen 30 und 240 sec, bevorzugt 100 und 210 sec, insbesondere 150 und 180sec erfolgen.

Die mit dem vorliegenden Verfahren hergestellten Holzwerkstoffplatten weisen somit eine Bindemittelzusammensetzung auf, umfassend
- mindestens eine erste Komponente aus mindestens einem Zucker, mindestens einem Zuckeralkohol, mindestens einer Stärke oder einer Mischung;
- mindestens eine zweite Komponente umfassend mindestens einen Polyvinylalkohol; und
- mindestens eine dritte Komponente umfassend mindestens ein Isocyanat.

Die in dem vorliegenden Verfahren verwendeten Holzpartikel sind bevorzugt Holzfasern, Holzspänen oder Holzstrands.

Mit dem vorliegenden Verfahren können demnach Holzwerkstoffplatten in Form einer Holzfaserplatte, insbesondere eine HDF oder MDF, einer Holzspanplatte oder einer OSB-Platte (oriented strand board) bereitgestellt werden.

Holzfaserplatten und Holzspanplatten bilden die Basis vieler Gegenstände des täglichen Lebens, beispielsweise von Möbeln oder Belägen für Wand, Boden oder Decke.

Für die Herstellung von Holzfaserplatten und Holzspanplatten werden zunächst Hackschnitzel aus geeigneten Hölzern hergestellt. Es ist auch möglich, Holzspäne aus Holz ohne den Umweg über Hackschnitzel herzustellen. Die Hackschnitzel bzw. das Holz können vor ihrer weiteren Verwendung von Fremdstoffen z.B. im Rahmen einer Trockenreinigung oder Nassreinigung gereinigt.

Es schließt sich ein Zerspanungsprozess der Holzhackschnitzel in einem Zerspaner oder ein Zerfaserungsprozess der Holzhackschnitzel in einem Refiner an, wobei Holzspänen bzw. den Holzfasern während des Zerfaserungsprozesses ebenfalls zusätzlich ein Benetzungsmittel zur Verbesserung der Wasserbenetzung des wärmebehandelten Holzes bzw. der Holzhackschnitzel zugegeben werden kann.

Die mit dem Zerfaserungsprozess hergestellten Holzfasern weisen typischerweise eine Länge zwischen 1,5 mm und 20 mm und eine Dicke zwischen 0,05 mm und 1 mm auf.

In einem weiteren Schritt werden die Holzspäne nach dem Zerspanungsprozess oder die Holzfasern nach dem Zerfaserungsprozess mit dem vorliegenden Bindemittelsystem wie oben beschrieben beaufschlagt bzw. in Kontakt gebracht, wobei das In-Kontaktbringen der Holzspäne und Holzfasern mit dem Bindemittel jeweils in unterschiedlicher Weise erfolgen kann.

So können die Holzfasern mit dem mindestens einen Bindemittelsystem in einem Blow-Line-Verfahren kontaktiert werden, bei dem das Bindemittel in den Strom aus Holzfasern eingespritzt wird. Hierbei ist es möglich, dass die Komponenten des Bindemittelsystems zur Holzfaservernetzung in der Blow-Line einem Holzfaser-Dampfgemisch zugeführt werden.

Holzspäne werden hingegen bevorzugt in einer Mischvorrichtung mit dem Bindemittel kontaktiert.

Nach Beleimen werden die Holzspäne oder Holzfasern auf ein Transportband mittels Wind- und/oder Wurfsichtung aufgebracht. Es folgt das Verpressen der auf dem Transportband angeordneten Holzspäne oder Holzfasern, unter den oben angeführten Pressbedingungen. Grobspanplatten, auch OSB-Platten (oriented strand boards) genannt, sind Holzwerkstoffplatten, die aus langen Spänen (strands) hergestellt werden. Die ursprünglich als Abfallprodukte der Furnier- und Sperrholzindustrie anfallenden OSB-Platten werden jedoch zunehmend im Holz- und Fertighausbau eingesetzt, da OSB-Platten leicht sind und trotzdem die an Bauplatten gesetzten statischen Anforderungen erfüllen. So werden OSB-Platten als Bauplatten und als Wand- oder Dachbeplankung oder auch im Fußbodenbereich eingesetzt.

Die Herstellung der OSB-Platten erfolgt in einem mehrstufigen Prozess, wobei zunächst die Späne oder Strands aus entrindetem Rundholz, bevorzugt Nadelhölzer, in Längsrichtung durch rotierende Messer abgeschält werden. Im sich anschließenden Trocknungsvorgang wird die natürliche Feuchtigkeit der Strands bei hohen Temperaturen reduziert.

Die so hergestellten Holzstrands können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0, 3 und 1,5 mm, insbesondere bevorzugt zwischen 0, 4 und 1 mm aufweisen.

In einer Ausführungsform weisen die Holzstrands z.B. eine Länge zwischen 150 und 200 mm, eine Breite zwischen 15 und 20 mm, eine Dicke zwischen 0,5 und 1 mm und eine Feuchte von max. 50% auf.

Im Anschluss an die Trocknung der Strands werden diese in eine Beleimvorrichtung (Coil) eingeführt, in welcher das vorliegende Bindemittelsystem auf die Späne aufgebracht wird.

Nach der Beleimung werden die beleimten Strands in Streuapparaturen alternierend längs und quer zur Produktionsrichtung gestreut, so dass die Strands kreuzweise in mindestens drei Schichten angeordnet sind (untere Deckschicht - Mittelschicht - obere Deckschicht). Die Streurichtung von unterer und oberer Deckschicht ist dabei gleich, weichen jedoch von der Streurichtung der Mittelschicht ab. Auch unterscheiden sich die in der Deckschicht und Mittelschicht verwendeten Strands voneinander. So sind die in den Deckschichten verwendeten Strands flächig und die in der Mittelschicht verwendeten Strands weniger flächig bis hin zu spanförmig. Üblicherweise werden bei der Herstellung der OSB-Platten zwei Materialstränge gefahren: einer mit flächigen Strands für die späteren Deckschichten und einer mit "Spänen" für die Mittelschicht. Entsprechend können die Strands in der Mittelschicht qualitativ schlechter sein, da die Biegefestigkeit im Wesentlichen durch die Deckschichten erzeugt wird. Deshalb kann auch Feingut, das beim Zerspanen entsteht, in der Mittelschicht von OSB-Platten verwendet werden.

Im Anschluss an die Streuung der Strands erfolgt ein kontinuierliches Verpressen der selbigen unter hohem Druck und hoher Temperatur von z.B. 200 bis 250°C.

Die Vorteile des vorliegenden Bindemittelsystems und der damit hergestellten Holzwerkstoffplatten lassen sich wie folgt zusammenfassen:
- Keine Konkurrenz zu Nahrungsmittelherstellung;
- Gesundheitlich unbedenkliche Rohstoffe;
- Verbesserte CO₂-Bilanz;
- Lange Haltbarkeit;
- Sehr variable Rezeptur.

Die Erfindung wird nachfolgend an mehreren Ausführungsbeispielen näher erläutert.

### Ausführungsbeispiel 1

In der folgenden Tabelle 1 sind verschiedene Rezepte aufgeführt, die allesamt zu einem guten bis sehr guten Ergebnis bei Verklebungsversuchen geführt haben. In Vorversuchen wurden Verklebungsversuche mit den Einzelkomponenten durchgeführt. Dabei konnten in keinem Fall bei einem mit den in der Tabelle 1 aufgeführten Auftragsmengen eine gute Verklebung erzeugt werden. Bei allen Varianten mit den Einzelkomponenten war ein Wegschlagen des Leimes in die Platten zu beobachten.

**Tabelle 1**

| Nr. | Zucker* in g. fl. | Polyalkohole** in g fl. | Stärke *** in g. fl | PVOH*** * in g fl. | PMDI*** ** in g | Auftragsmenge Leim in g fl./fest auf 10x10 cm |
|---|---|---|---|---|---|---|
| 1 | 139 | 0 | 25 | 0 | 13 | 5,0/3,12 |
| 2 | 134 | 0 | 0 | 25 | 13 | 5,0/2,98 |
| 3 | 123 | 0 | 0 | 96,7 | 5 | 7,0/3,08 |
| 4 | 89 | 0 | 0 | 70 | 0,75 | 7,0/3,0 |
| 5 | 70 | 70 (Sorbitol) | 0 | 25 | 13 | 7,0/3,0 |
| 6 | 35 | 105 (Sorbitol) | 0 | 25 | 13 | 7,0/3,0 |
| 7 | 0 | 139 (Sorbitol) | 0 | 25 | 13 | 5,0/2,98 |

| | | | | | | |
|---|---|---|---|---|---|---|
| *) wurde als 60 Gew%ige Lösung eingesetzt **) Sorbitol wurde als 60 Gew%ige Lösung eingesetzt ***) wurde als 10 Gew%ige Lösung/Aufschlämmung eingesetzt ****) wurde als 20 Gew%ige Lösung eingesetzt. Es können teil- oder vollständig hydrolisierte PVOH eingesetzt werden. Teilhydrolysierte sind wegen der besseren Wasserlöslichkeit bevorzugt. *****) wurde als 100% eingesetzt | | | | | | |

Mit den verschiedenen Ansätzen wurden jeweils Verklebungsversuche gemacht. Dabei wurden HDF in einer Flächenverklebung aufeinander geklebt. Die Klebstoffmenge lag bei den HDF-Proben ( 10 × 10 cm × Dicke ) bei ca. 3 g fest. Dabei wurde bei Leimflotten mit einem hohen Wassergehalt ( Polyvinylalkohol und Stärke ) nach dem Leimauftrag ca. 15 min Abdunstzeit eingehalten. Zum Vergleich wurde eine Verklebung mit einem Harnstoff-Formaldehydleim durchgeführt. Dort waren ebenfalls ca. 3 g Leim fest aufgetragen worden. Die beiden HDF wurden mit Schraubzwingen aufeinander fixiert und dann bei 110°C zwei Stunden im Ofen ausgehärtet. Nach dem Abkühlen wurde mit einem Stechbeitel ein Aufstechversuch durchgeführt. Dabei war bei den aufgeführten Varianten jeweils ein Bruch im Fügeteil zu beobachten. Von entscheidender Bedeutung bei den Verklebungsversuchen ist, dass zunächst die Zucker/Zuckeralkohole und der Polyvinylalkohol auf die Fügeteile aufgetragen werden und danach das PMDI. Der vermutete Grund dafür ist, dass das PMDI ansonsten wegen seiner niedrigen Viskosität in die Fügeteile wegschlägt und dann für die Verklebung nicht mehr zur Verfügung steht.

Anschließend wurden mit Rezepturen, die im Aufstechtest gute Ergebnisse geliefert hatte, auch Einschicht-Laborspanplatten hergestellt. Dabei kamen folgende Rezepturen zur Anwendung ( bezogen auf 1 kg Mittelschichtspäne ).Gegenüber den obigen Versuchen wurde die Zucker/Polyalkoholkomponente aus Prozessgründen in höherer Konzentration eingesetzt. In Vorversuchen wurde bestätigt, dass bei Einhaltung der oben beschriebenen Reihenfolge der Zugabe die besten Ergebnisse erzielt wurden. Die Verwendung einer geänderten Reihenfolge war aber auch möglich:

### Ausführungsbeispiel 2

Es wird folgende Rezeptur verwendet (Zuckervariante):
- 169,5 g Zucker ( 70 Gew%ige Lösung )
- 65,0 g Polyvinylalkohol 22000 ( 15 Gew%ige Lösung )
- 21,0 g PMDI ( 100 Gew%ige Lösung )

Diese Rezeptur wurde in der oben beschriebenen Reihenfolge in einem Mischer auf die Späne aufgesprüht. Dann wurden aus den beleimten Spänen in einer Presse 15 mm Spanplatten mit unterschiedlichen Rohdichten unter Verwendung von unterschiedlichen Pressparametern hergestellt. Die Press- und Plattenparameter sind in Tabelle 2 zusammengefasst:

**Tabelle 2**

| | Temperatur in °C | Presszeit in sec. | | Pressdruck in N/mm² | | Plattendicke in mm | Rohdichte in kg/m³ Soll / Ist | Querzug in N/mm² |
|---|---|---|---|---|---|---|---|---|
| 1 | 180 | | 1. 30 | | 1. 1,8 | 17,4 | 700 / 680 | 0,26 |
| | | | 2. 150 | | 2. 1,5 | | | |
| 2 | 180 | | 1. 30 | | 3. 1,8 | 17,1 | 700 / 670 | 0,24 |
| | | | 2. 150 | | 4. 1,5 | | | |
| 3 | 180 | | 1. 30 | | 3. 1,8 | 18,3 | 800 / 705 | 0,31 |
| | | | 2. 180 | | 4. 1,5 | | | |
| 4 | 180 | | 1. 30 | | 3. 1,8 | 16,9 | 700 / 675 | 0,36 |
| | | | 2. 210 | | 4. 1,5 | | | |
| 5 | 180 | | 1. 30 | | 3. 1,8 | 15,8 | 650 /621 | 0,35 |
| | | | 2. 240 | | 4. 1,5 | | | |

### Ausführungsbeispiel 3

Es wird folgende Rezeptur verwendet (Zuckeralkoholvariante):
- 169,5 g Sorbitol ( 70 Gew%ige Lösung )
- 65,0 g Polyvinylalkohol 22000 ( 15 Gew%ige Lösung )
- 21,0 g PMDI ( 100 Gew%ige Lösung )

Diese Rezeptur wurde in der oben beschriebenen Reihenfolge in einem Mischer auf die Späne aufgesprüht. Dann wurden aus den beleimten Spänen in einer Presse 15 mm Spanplatten mit unterschiedlichen Rohdichten unter Verwendung von unterschiedlichen Pressparametern hergestellt. Die Press- und Plattenparameter sind in Tabelle 3 zusammengefasst:

**Tabelle 3**

| | Temperatur in °C | Presszeit in sec. | | Pressdruck in N/mm² | | Plattendicke in mm | Rohdichte in kg/m³ Soll / Ist | Querzug in N/mm² |
|---|---|---|---|---|---|---|---|---|
| 1 | 180 | | 3. 30 | | 3. 1,8 | 17,2 | 700 / 665 | 0,24 |
| | | | 4. 210 | | 4. 1,5 | | | |
| 2 | 180 | | 5. 30 | | 7. 1,8 | 18,5 | 800 / 708 | 0,32 |
| | | | 6. 210 | | 8. 1,5 | | | |
| 3 | 180 | | 5. 30 | | 7. 1,8 | 16,0 | 650 / 636 | 0,22 |
| | | | 6. 210 | | 8. 1,5 | | | |
| 4 | 180 | | 5. 30 | | 7. 1,8 | 16,7 | 700 / 691 | 0,35 |
| | | | 6. 240 | | 8. 1,5 | | | |
| 5 | 180 | | 5. 30 | | 7. 1,8 | 18,6 | 750 / 736 | 0,38 |
| | | | 6. 240 | | 8. 1,5 | | | |

Wie aus den Ergebnissen zu entnehmen ist werden bezüglich der Querzugfestigkeiten die Werte für P1 und P2 gemäß der DIN EN 312 erreicht.

Weiterhin ist festzustellen, dass eine Verlängerung der Presszeiten einen positiven Einfluss auf die Festigkeiten der Platte hat.

Bei der Formulierung der Rezepte ist besonders positiv, dass die Hauptkomponente (Zucker-/Zuckeralkohollösungen) relativ konzentriert eingesetzt werden können (Feststoffgehalt bis ca. 70 Gew%). Dadurch ist eine gute Steuerung des Wassergehaltes der Späne möglich.

## Patentansprüche

1. Verfahren zur Herstellung einer Holzwerkstoffplatte unter Verwendung eines Bindemittelsystems umfassend die Schritte:
a) Bereitstellen von Holzpartikeln,
b) Beleimen der Holzpartikel in der Reihenfolge:
b1) Aufbringen einer ersten Komponente umfassend mindestens einen Zucker, mindestens einen Zuckeralkohol, mindestens eine Stärke oder eine Mischung davon auf die Holzpartikel;
b2) Aufbringen einer zweiten Komponente umfassend mindestens einen Polyvinylalkohol auf die Holzpartikel;
b3) Aufbringen einer dritten Komponente umfassend mindestens ein Isocyanat auf die Holzpartikel;
c) Aufbringen der beleimten Holzpartikel auf ein Transportband; und
d) Verpressen der auf dem Transportband angeordneten beleimten Holzpartikel.

2. Verfahren nach Anspruch 1, **dadurch gekennzeichnet, dass** die mindestens eine erste Komponente aus mindestens einem Zucker, mindestens einem Zuckeralkohol, mindestens einer Stärke oder einer Mischung in einer Menge zwischen 70 und 80 Gew%, bevorzugt 75 Gew% in Bezug auf die Gesamtmenge an erster, zweiter und dritter Komponente vorliegt.

3. Verfahren nach einem der vorhergehenden Ansprüche, **dadurch gekennzeichnet, dass** der mindestens eine Zucker ein Monosaccharid aus der Gruppe der Pentosen und Hexosen, insbesondere ausgewählt aus der Gruppe enthaltend Arabinose, Ribose, Xylose, Glucose (Dextrose), Mannose, Galactose und Fructose ist.

4. Verfahren nach einem der Ansprüche 1-2, **dadurch gekennzeichnet, dass** der mindestens eine Zuckeralkohol ausgewählt ist aus einer Gruppe enthaltend vierwertige, fünfwertige, sechswertige Alkohole, wobei als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden.

5. Verfahren nach einem der Ansprüche 1-2, **dadurch gekennzeichnet, dass** die mindestens eine Stärke ausgewählt aus der Gruppe enthaltend Kartoffelstärke, Maisstärke, Weizenstärke, Reisstärke.

6. Verfahren nach einem der vorhergehenden Ansprüche, **dadurch gekennzeichnet, dass** der mindestens eine Polyvinylalkohol teilweise oder vollständig hydrolysiert vorliegt.

7. Verfahren nach einem der vorhergehenden Ansprüche, **dadurch gekennzeichnet, dass** das mindestens eine Isocyanat Polydiphenylmethandiisocyanat (PMDI), Toluylendiisocyanat (TDI) und/oder Diphenylmethandiisocyanat (MDI) ist.

8. Verfahren nach einem der vorhergehenden Ansprüche, **dadurch gekennzeichnet, dass** der mindestens eine Zucker und/oder der mindestens eine Zuckeralkohol in einer Menge zwischen 80 und 200 g fl, bevorzugt in einer Menge zwischen 100 und 150 g fl, insbesondere bevorzugt in einer Menge zwischen 120 und 140 g fl bezogen auf 1 kg Holzpartikel aufgetragen wird.

9. Verfahren nach einem der vorhergehenden Ansprüche, **dadurch gekennzeichnet, dass** der mindestens eine Polyvinylalkohol in einer Menge zwischen 20 und 100 g fl, bevorzugt 40 und 80 g fl, insbesondere bevorzugt zwischen 50 und 70 g fl bezogen auf 1 kg Holzpartikel aufgebracht wird.

10. Verfahren nach einem der vorhergehenden Ansprüche, **dadurch gekennzeichnet, dass** das mindestens eine Isocycanat in einer Menge zwischen 15 und 25 g, bevorzugt zwischen 17 und 23 g, insbesondere bevorzugt zwischen 19 und 21 g in Form einer 100 Gew%igen Lösung bezogen auf 1 kg Holzpartikel aufgetragen.

11. Verfahren nach einem der vorhergehenden Ansprüche, **dadurch gekennzeichnet, dass** das Verpressen bei einer Presstemperatur zwischen 150 und 200°C, bevorzugt 180°C und einer Presszeit zwischen 30 und 240 sec, bevorzugt 100 und 210 sec, insbesondere 150 und 180 sec erfolgt.

12. Verfahren nach einem der vorhergehenden Ansprüche, **dadurch gekennzeichnet, dass** die Holzpartikel in Form von Holzfasern, Holzspänen oder Holzstrands verwendet werden.

## Claims

1. A method of manufacturing a wood-based panel using a binder system comprising the steps of:
a) Providing wood particles,
b) Glueing wood particles in the order:
b1) applying a first component comprising at least one sugar, at least one sugar alcohol, at least one starch or a mixture thereof to the wood particles;
b2) applying a second component comprising at least one polyvinyl alcohol to the wood particles;
b3) applying a third component comprising at least one isocyanate to the wood particles;
(c) placing the glued wood particles on a conveyor belt; and
d) Pressing of the glued wood particles arranged on the conveyor belt.

2. Method according to claim 1, **characterized in that** the at least one first component consisting of at least one sugar, at least one sugar alcohol, at least one starch or a mixture is present in an amount between 70 and 80% by weight, preferably 75% by weight with respect to the total amount of first, second and third components.

3. Method according to one of the preceding claims, **characterised in that** the at least one sugar is a monosaccharide from the group of pentoses and hexoses, in particular selected from the group comprising arabinose, ribose, xylose, glucose (dextrose), mannose, galactose and fructose.

4. Method according to one of claims 1-2, **characterized in that** the at least one sugar alcohol is selected from a group comprising tetravalent, pentavalent, hexavalent alcohols, wherein threit, erythritol, pentaerythritol are used as tetravalent alcohols, arabitol, adonitol, xylitol are used as pentavalent alcohols and sorbitol, mannitol, dulcitol, dipentaerythritol are used as hexavalent alcohols.

5. Method according to one of claims 1-2, **characterized in that** the at least one starch is selected from the group consisting of potato starch, corn starch, wheat starch, rice starch.

6. Method according to one of the preceding claims, **characterized in that** the at least one polyvinyl alcohol is partially or completely hydrolysed.

7. Method according to one of the preceding claims, **characterized in that** the at least one isocyanate is polydiphenylmethane diisocyanate (PMDI), toluylene diisocyanate (TDI) and/or diphenylmethane diisocyanate (MDI).

8. Method according to one of the preceding claims, **characterized in that** the at least one sugar and/or the at least one sugar alcohol is applied in an amount between 80 and 200 g fl, preferably in an amount between 100 and 150 g fl, more preferably in an amount between 120 and 140 g fl relative to 1 kg wood particles.

9. Method according to one of the preceding claims, **characterized in that** the at least one polyvinyl alcohol is applied in an amount between 20 and 100 g fl, preferably 40 and 80 g fl, more preferably between 50 and 70 g fl, based on 1 kg of wood particles.

10. Method according to one of the preceding claims, **characterized in that** the at least one isocycanate is applied in an amount between 15 and 25 g, preferably between 17 and 23 g, more preferably between 19 and 21 g, in the form of a 100% by weight solution relative to 1 kg of wood particles.

11. Method according to one of the preceding claims, **characterized in that** the pressing is carried out at a pressing temperature between 150 and 200°C, preferably 180°C, and a pressing time between 30 and 240 sec, preferably 100 and 210 sec, in particular 150 and 180 sec.

12. Method according to one of the preceding claims, **characterised in that** the wood particles are used in the form of wood fibres, wood chips or wood strands.

## Revendications

1. Procédé pour la fabrication d'un panneau en matériau dérivé du bois au moyen d'un système de liant comprenant les étapes suivantes :
a) fourniture de particules de bois,
b) encollage des particules de bois dans l'ordre suivant :
b1) application d'un premier composant comprenant au moins un sucre, au moins un alcool de sucre, au moins un amidon ou un mélange de ceuxci sur les particules de bois ;
b2) application d'un deuxième composant comprenant au moins un alcool polyvinylique sur les particules de bois ;
b3) application d'un troisième composant comprenant au moins un isocyanate sur les particules de bois ;
c) application des particules de bois encollées sur une bande de transport ; et
d) compression des particules de bois encollées disposées sur la bande de transport.

2. Procédé selon la revendication 1, **caractérisé en ce que** le au moins un premier composant parmi au moins un sucre, au moins un alcool de sucre, au moins un amidon ou un mélange est présent dans une quantité comprise entre 70 et 80 % en poids, de préférence 75 % en poids par rapport à la quantité totale de premier, deuxième et troisième composant.

3. Procédé selon l'une quelconque des revendications précédentes, **caractérisé en ce que** le au moins un sucre est un monosaccharide du groupe des pentoses et hexoses, en particulier choisi dans le groupe contenant l'arabinose, le ribose, le xylose, le glucose (dextrose), le mannose, le galactose et le fructose.

4. Procédé selon l'une quelconque des revendications 1-2, **caractérisé en ce que** le au moins un alcool de sucre est choisi dans un groupe contenant des alcools tétravalents, pentavalents, hexavalents, dans lequel le thréitol, l'érythrite, le pentaérythrite sont utilisés comme alcools tétravalents, l'arabite, l'adonite, le xylite comme alcools pentavalents et le sorbite, le mannite, le dulcite, le dipentaérythrite comme alcools hexavalents.

5. Procédé selon l'une quelconque des revendications 1-2, **caractérisé en ce que** le au moins un amidon est choisi dans le groupe contenant la fécule de pomme de terre, l'amidon de maïs, l'amidon de blé, l'amidon de riz.

6. Procédé selon l'une quelconque des revendications précédentes, **caractérisé en ce que** le au moins un alcool polyvinylique est présent de manière partiellement ou entièrement hydrolysée.

7. Procédé selon l'une quelconque des revendications précédentes, **caractérisé en ce que** le au moins un isocyanate est un diisocyanate de polydiphénylméthane (PMDI), diisocyanate de toluylène (TDI) et/ou diisocyanate de diphénylméthane (MDI).

8. Procédé selon l'une quelconque des revendications précédentes, **caractérisé en ce que** le au moins un sucre et/ou le au moins un alcool de sucre est appliqué dans une quantité comprise entre 80 et 200 g fl, de préférence dans une quantité comprise entre 100 et 150 g fl, de manière particulièrement préférée dans une quantité comprise entre 120 et 140 g fl par rapport à 1 kg de particules de bois.

9. Procédé selon l'une quelconque des revendications précédentes, **caractérisé en ce que** le au moins un alcool polyvinylique est appliqué dans une quantité comprise entre 20 et 100 g fl, de préférence 40 et 80 g fl, de manière particulièrement préférée entre 50 et 70 g fl par rapport à 1 kg de particules de bois.

10. Procédé selon l'une quelconque des revendications précédentes, **caractérisé en ce que** le au moins un isocyanate est appliqué dans une quantité comprise entre 15 et 25 g, de préférence entre 17 et 23 g, de manière particulièrement préférée entre 19 et 21 g sous forme d'une solution à 100 % par rapport à 1 kg de particules de bois.

11. Procédé selon l'une quelconque des revendications précédentes, **caractérisé en ce que** la compression s'effectue à une température de pressage comprise entre 150 et 200 °C, de préférence de 180 °C et un temps de pressage compris entre 30 et 240 sec, de préférence 100 et 210 sec, en particulier 150 et 180 sec.

12. Procédé selon l'une quelconque des revendications précédentes, **caractérisé en ce que** les particules de bois sont utilisées sous forme de fibres de bois, rabotures ou copeaux de bois.
